(19) Europäisches Patentamt
European Patent Office
Office européen des brevets

(11) Publication number: **0 429 976 A2**

# (12) EUROPEAN PATENT APPLICATION

(21) Application number: **90121891.7**

(22) Date of filing: **15.11.90**

(51) Int. Cl.5: **G07F 7/00, G06K 13/08**

(30) Priority: **22.11.89 IT 6803189**

(43) Date of publication of application:
**05.06.91 Bulletin 91/23**

(84) Designated Contracting States:
**CH DE ES FR GB LI Bulletin**

(71) Applicant: **URMET S.p.A. Costruzioni Elettro-Telefoniche Via Bologna 188/C**
**I-10154 Torino(IT)**

(72) Inventor: **Mondardini, Massimo**
**Via Mazzini 40**
**I-10123 Torino(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) **Multiple-function reader device for reading public telephone enabling cards.**

(57) A telephonic card read-out device comprises two reading areas (A1-A2) which are arranged mutually in series with respect to a card insertion slot (14), the first area being dedicated to a read-out of credit cards and chip-cards, and the second area to the read-out, cancellation and expenditure display of prepaid cards, a first retracting flap (16) for closing the card insertion slot, a second retracting flap (23) separating the two reading areas, delimiting the first area, and operating as a stop element for the cards processed in the area and as a sensor for chip-cards.

FIG. 2

# MULTIPLE-FUNCTION READER DEVICE FOR READING PUBLIC TELEPHONE ENABLING CARDS

The present invention relates to a multiple-function reader device for reading public telephone enabling cards.

Three different types of cards are currently in use in the management of public telephony, namely credit cards, debit or prepaid cards and cards comprising a memory in the form of an integrated circuit, known as "chip-cards".

The modes of operation of these types of card are known: prepaid cards have an intrinsic value expressed in terms of charge units which are generally stored on a magnetic band and are subjected to decrease and cancellation, credit cards and chip-cards contain a series of data and codes, stored on a magnetic band or in the built-in memory, which enable, for every telephone call made, the corresponding charging on the part of the telephone company to the owner of the card.

Furthermore, as regards prepaid cards, there are various systems for recording and reading the charge units, and the present invention relates specifically to prepaid cards with the recording and reading system described in the prior patent No. 1,159,459 by the same Applicant.

The reading and management of the three different types of card is obviously different, and the aim of the present invention is to provide a multiple-function reader device which can handle the plurality of known cards with the reading and processing methods required for each card.

Within the scope of this general aim, an important object of the present invention is to provide a reader device which allows to acquire prepaid cards inside it to ensure the correctness of the movements of the cards independently of external actions and, on the other hand, the acquisition of credit cards without blocking the card to ensure the recoverability of said card, on the part of the user, in any possible situation.

Another object of the present invention is to provide a reader which allows the unequivocal positioning of the various types of card so as to facilitate the use of said reader on the part of the user and completely avoid incorrect actuations.

A further important object of the present invention is to provide a multiple-function reader for cards of different types, as specified, which has no slots dedicated to each type of card and has instead a single slot for which said unequivocal positioning of the different cards is required.

Another object of the invention is to provide a reader which is structurally simple, highly reliable in operation and such as to require a significantly low energy consumption.

In order to achieve this aim, these important objects and others which will become apparent from the following detailed description, the present invention relates to a multiple-function reader device for reading public telephone enabling cards, characterized in that it comprises two reading areas arranged mutually in series with respect to the card insertion slot, the first of said areas being dedicated to the reading of credit cards and chip-cards, the second area being dedicated to the reading, cancellation and display of the expenditure of prepaid cards; a first retracting flap which closes the card insertion slot, a second retracting flap which separates the two dedicated areas and acts as wall for delimiting the first area, as stop element for the cards processed in said area and as chip-card sensor; means for selectively drawing the cards into the first dedicated area or into the second dedicated area and means for actuating the first retracting flap and the second retracting flap, said means comprising a strobe disk for generating control pulses which correspond to respective configurations of the reader in the various steps of card processing.

Further characteristics and advantages will become apparent from the following detailed description and with reference to the accompanying drawings, given by way of non-limitative example, wherein:

figure 1 is a perspective view of the device;

figure 2 is a sectional view taken along the line II-II of figure 1;

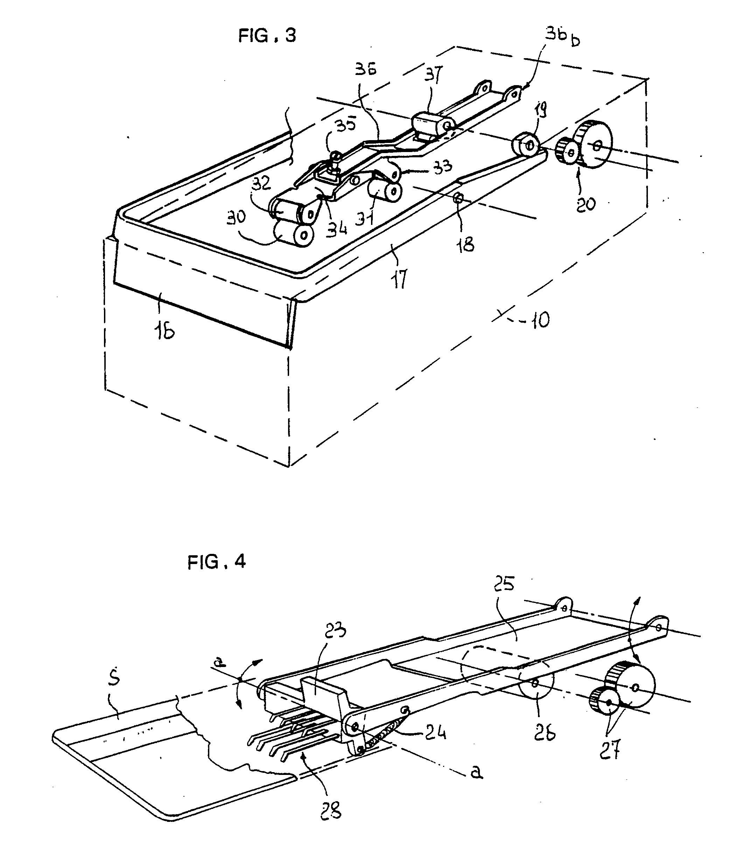

figure 3 is a schematic perspective detail view of the first retracting flap, with the related movement elements, and of the means for the selective drawing of the cards;

figure 4 is a perspective detail view of the second retracting flap and of the related movement elements;

figure 5 is a schematic top plan view of the device.

The reader device according to the present invention is substantially constituted by a box-like structure 10 inside which a panel 12 for supporting the cards 5 and allowing the sliding thereof is delimited by a horizontal wall 11. The panel 12 extends outside the structure beyond the corresponding front wall 13 of said structure, in which a card insertion slot 14 is defined.

A contrast plate 15 is arranged on the horizontal wall 11 and is spaced from said wall so that the wall and the contrast plate delimit an opening which defines a card guiding and transit channel which is connected to the slot 14; the dimensions of said channel are substantially equivalent to the standard ones of the processed cards. The slot 14 is closed by a first retracting flap 16 which is supported at the end of a fork 17 which in turn is supported so as to be able to oscillate by a pivot 18 above the sliding panel 12 of the cards. The free end of at least one of the arms of the fork 17 is subjected to the action of a cam 19 which is actuated, by means of a set of transmission gearwheels 20, by a servomotor 21. A slot 22 is defined in an intermediate region of the wall 11 and of the plate 15 at a distance from the slot 14 which is substantially equal to the longitudinal dimension of the cards S, and a second retracting flap 23 protrudes therefrom.

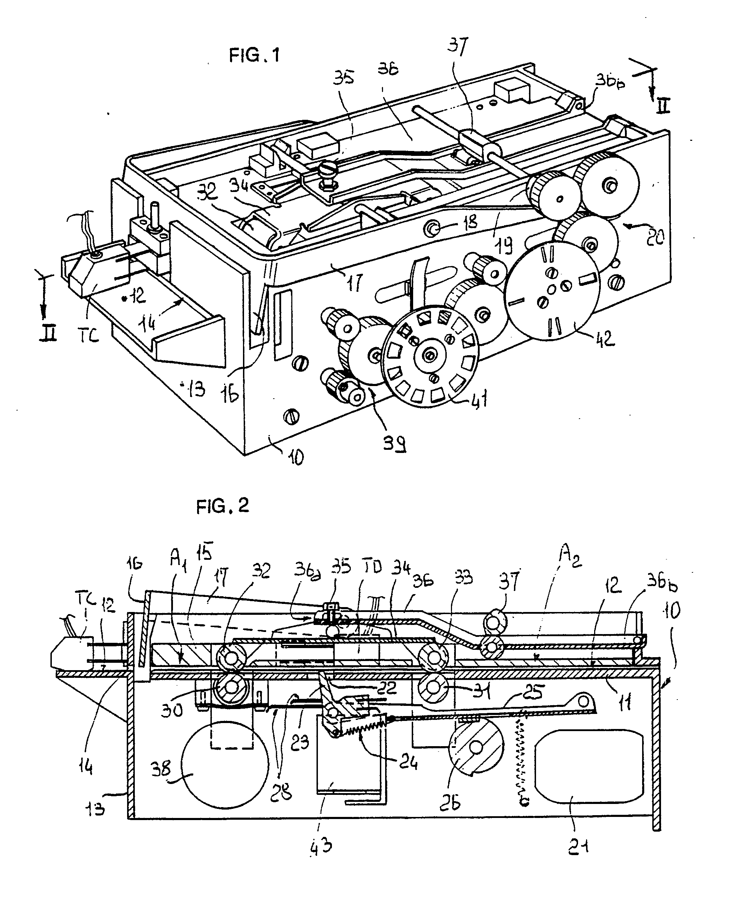

As clearly shown in figure 2, the flap 23 delimits, on the card sliding panel 12, two reading areas A1-A2 which are arranged mutually in series with respect to the card insertion slot 14; the first of said areas is dedicated to the reading of credit cards and chip-cards, whereas the second one is dedicated to the reading of prepaid cards. The flap 23, in raised position, acts as wall for delimiting the first area, as stop element for the cards processed therein and as sensor for chip-cards. For this purpose said flap is supported, so that it can oscillate against the action of a spring 24, by the end fork of an oscillating plate 25; said plate, by virtue of the action of a cam 26 which is actuated by means of transmission gearwheels 27 by the servomotor 21, moves the flap from an inactive position, in which said flap retracts into the slot 22, to an active position in which said flap protrudes from said slot and vice versa.

In the active position, the flap 23, if engaged and pushed by a card, rotates about its own pivoting axis "a" and is elastically biased by the spring 24 so as to move a series of contacts 28 which are associated therewith to engage the corresponding contact pad provided on chip-cards in order to discriminate this type of card from credit cards, which are also processed in the area A1 of the device.

A first single-section magnetic reading head. TC is provided at the slot 14 on the outer side of the front wall 13 and is dedicated to the reading of credit cards processed in the area A1 of the device.

A second magnetic head TD is similarly arranged at the area A2 and is dedicated to the reading of prepaid cards. More precisely, the head TD is composed of two aligned sections which are dedicated, respectively and in a per se known manner, to the reading and cancellation of prepaid cards.

Two drive rollers 30-31 are provided for the movement of the cards in the first and second areas of the device and cooperate with respective superimposed pinch rollers 32-33. The rollers 30-31 face the card sliding panel 12 and are substantially tangent thereto, respectively at the area A1 and at the area A2, through respective openings in the horizontal wall 11. The pinch rollers 32-33 are correspondingly supported at the ends of a rocker 34 with a central pivot on which the end 36a of a rod 36 acts by means of an adjustable tappet 35. The other end 36b of said rod is pivoted to the box-like structure 10 and is subjected to the action of a cam 37 which is keyed on the same shaft as the cam 19 which actuates the first retracting flap. A motor 38 is provided in order to move the drive rollers 30-31 by means of a transmission set 39. An idle gearwheel is inserted in the transmission set 39 and a first strobe disk 41 is keyed on said idle gearwheel and cooperates with a respective optical sensor which is not illustrated.

A second strobe disk 42 which cooperates with a corresponding optical sensor is keyed on the shaft of the cam 26 which actuates the supporting plate of the second retracting flap. An electromagnet 43 is also arranged in the area A2 below the horizontal wall 11, and its punch-shaped moving core is suitable for marking the overlying debit cards to provide a visual indication of the expenditure of the pulses stored on the magnetic band of said cards.

The reader is completed by a further series of optical sensors which are intended to detect the presence of the card inside it and to provide corresponding criteria which are used for the management of the different cards.

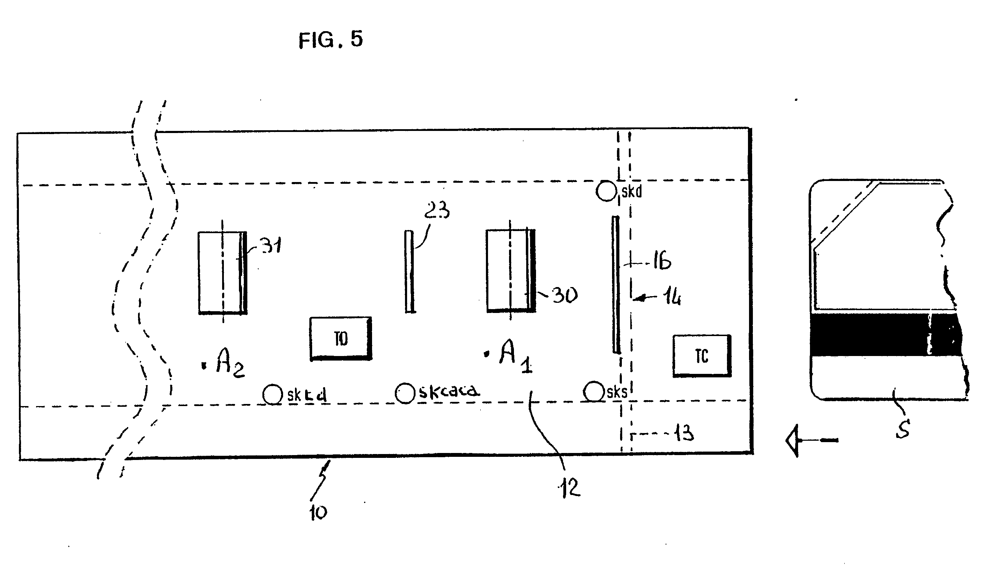

With reference to figure 5, the following optical sensors can be seen in particular (the related function is indicated next to each sensor reference):
"SKs" - card at insertion slot, left side
"SKd" - card at insertion slot, right side
"Sktd" - card at charge head TD
"SKaca" - card at second stop flap.

The mode of operation of the above described reader provides six operating steps which are selected by the strobe disk 42, which is correspondingly provided for this purpose with a series of six slots, one of which is longer and corresponds to step zero, i.e. to the "start" step. The steps are as follows:

- step 0: the reader is idle and is preset as follows: the pinch rollers 32-33 are released, the second flap 23 is raised (closed), the first flap 16 is raised (open); the reader accepts the insertion of cards in the insertion slot 14.

- step 1: allows the blocking of chip-cards on the part of the pinch rollers; the reader assumes the following configuration: the pinch rollers 32-33 are loaded, the flap 23 is raised (closed), the flap 16 is raised (open);

- step 2: allows the advancement of prepaid cards; the reader assumes the following configuration: the pinch rollers 32-33 are loaded, the flap 23 is lowered (open), the flap 16 is raised (open);

- step 3: protects the reading and cancellation operations involving prepaid cards present inside the reader; the reader assumes the following configuration: the pinch rollers 32-33 are loaded, the flap 23 is lowered (open), the flap 16 is lowered (closed);

- step 4: allows the ejection of prepaid cards; the reader assumes the following configuration: the pinch rollers 32-33 are loaded; the flap 23 is lowered (open) , the flap 16 is raised (open);

- step 5: allows the release of chip-cards; the reader assumes the following configuration: the pinch rollers 32-33 are released, the flap 23 is lowered (open) , the flap 16 is raised (open).

After preliminarily specifying the operating steps and the related configuration of the reader, the operation of said reader for the different types of cards it can process is now described.

a) - Reading credit cards.

Since the reader is in the configuration which corresponds to step 0, the card 5 inserted in the slot 14 and pushed into the reader stops against the flap 23. During the translatory motion, the optical sensors "SKs"'and "Skd" recognize a credit card from the card geometrical configuration, which does not have the card disabling corner (which has been removed), and enable the credit reading head TC; reading occurs during the extraction of the card.

b) - Reading chip-cards.

When the card is inserted, the optical sensors "SKs" and "SKd", by recognizing the geometrical configuration of the contour of the cards (which is complete), notify a logic control unit (of a per se known kind) to stand by for the further verification which is subsequently performed by the blocking flap 23. When the card makes contact with said flap, by virtue of the pressure exerted by the user it causes the rotation of said flap and the consequent lifting of the contacts 28 which are associated therewith; said contacts arrange themselves adjacent to the card and probe for the possible presence of the contact pad. If the outcome is positive, the logic system of the device discriminates the type of card. When the presence of a chip-card is recognized, the servomotor 21 is activated, the strobe disk 42 places itself on the first slot and this produces the activation of the pinch rollers 32-33 which, by exerting pressure on the card, keep it blocked inside the reader. If the card is moved while it is being read, for example as a consequence of an attempted fraud, the optical sensor "SKaca" issues a signal which inhibits the procedure in progress. Once the correct management of the card is completed, the reader ejects it automatically by activating the traction motor 38.

c) - Reading prepaid cards.

The optical sensors "SKs" and "SKd", after recognizing the card due to the absence of the card disabling corner (that is that triangular corner portion of the card to be removed by the user for enabling the card to operate), preset the reader for receiving said card by moving the strobe disk 42 to the position which corresponds to step 2, activating the traction motor 38 and simultaneously checking the length of the card by means of the optical sensors "SKd", "SKtd" and "SKaca". If the check is positive, the control logic system activates the read section of the head TD, and after the reading operation has been performed it reverses the motion of the traction motor 38. The card follows the path in reverse, and the second section of the head TD is active in this step. If the result of both read operations is positive, the card is again moved in the opposite direction and is stopped on the magnetic synchronization reference which precedes the section to be canceled.

For this purpose, since the strobe disk 42 is located on the third slot, the flap 16 is lowered and closes the insertion slot 14. Once the telephone call is over, in the presence of charge pulses, the operations of magnetic cancellation and visualization of the expenditure occur by virtue of the activation of the head TD and respectively of the electromagnet 43. After this, the disk 42 sets itself on step 4 and the ejection of the card occurs.

The details of execution and the embodiments may naturally be varied extensively with respect to what is described and illustrated by way of non-limitative example without thereby abandoning the scope of the invention and without altering the concept of said invention.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A multiple-function reader device for reading public telephone enabling cards, characterized in that it comprises two reading areas (A1-A2) which are arranged mutually in series with respect to the card insertion slot (14), said first area being dedicated to the reading of credit cards and "chip-cards", said second area being dedicated to the reading, cancellation and expenditure display of prepaid cards; a first retracting flap (16) which closes the card insertion slot (14); a second retracting flap (23) which separates the two dedicated areas (A1-A2) and acts as wall for delimiting the first area (A1), as stop element for the cards which are processed in said area and as sensor for chip-cards; means (30,31) for the selective traction of the cards in the first and second dedicated areas (A1-A2) and means (21,24,25,26,27,41,42) for the actuation of said first and second retracting flaps (16,23), said means comprising a strobe disk (42) for generating control pulses which correspond to respective configurations of the reader in the different card processing steps.

2. A multiple-function reader device according to claim 1, characterized in that it comprises a box-like structure (10) with a horizontal wall (11) which delimits a panel (12) for supporting and sliding the cards on which the first and second dedicated areas (A1-A2) are defined, said areas being separated by the second retracting flap (23), and in that a contrast plate (15) is superimposed on said supporting and sliding panel (12), an opening being delimited between said plate (15) and said wall (11) and defining a channel for the guiding and transit of the cards which is connected to the insertion slot (14).

3. A multiple-function reader device according to claims 1 and 2, characterized in that the first retracting flap (16) for closing the insertion slot (14) is supported at the end of a fork (17) which in turn is supported, so as to be able to oscillate, above the card sliding panel (12), and in that the free end of at least one of the arms of said fork is driven by a cam (19) which is actuated by a servomotor (21) by means of a set of transmission gears (20).

4. A multiple-function reader device according to claims 1 and 3, characterized in that said strobe disk (42) is keyed on an idle gear of said transmission gear set (20).

5. A multiple-function reader device according to claims 1 to 3, characterized in that the second retracting flap (23) protrudes from a slot (22) of the wall which defines the card supporting and sliding panel (12) and is supported so as to be able to oscillate, against the action of a spring (24), by the end fork of an oscillating plate (25) driven by a cam (26) actuated by said servomotor (21) by means of transmission gears (27), said plate (25) in turn driving said flap (23) from an inactive position in which said flap (23) retracts into the slot (22), to an active position in which it protrudes from the slot (22) and vice versa.

6. A multiple-function reader device according to claims 1 and 5, characterized in that said second retracting flap (23) has a series of contacts (28) associated therewith, said contacts (28) engaging, as said flap is turned under the pressure of the cards, the corresponding contact pad of chip-cards to recognize this type of card.

7. A multiple-function reader device according to the preceding claims, characterized in that said reader device further comprises a first magnetic reading head (TC) and a second magnetic reading head (TD) arranged at the first dedicated area (A1) and at the second dedicated area (A2) respectively.

8. A multiple-function reader device, according to claim 1, characterized in that the means (30,31) for the selective traction of the cards comprise two drive rollers (30,31) which cooperate with respective superimposed pinch rollers (32,33) and in that the drive rollers (30,31) protrude onto the card sliding panel (12) at the first dedicated area (A1) and at the second dedicated area (A2) respectively.

9. A multiple-function reader device according to claim 8, characterized in that the pinch rollers (32,33) are supported at the ends of a rocker (34) with a central pivot on which the end (36a) of a rod (36) acts by means of an adjustable tappet (35), the other end (36b) of said rod (36) being pivoted to the box structure (10) of the reader; and in that said rod (36) is driven by a cam (37) which pushes the pinch rollers (32,33) to engage the drive rollers (31,32); said cam (37) being keyed on the same shaft which bears the further cam (19) which actuates the first retracting flap (16).

10. A multiple-function reader device according to the preceding claims, characterized in that it comprises a series of optical sensors adapted to detect the presence of said cards inside said reader.

11. A multiple-function reader device according to claims 1 and 4, characterized in that said strobe disk (42) is provided with six operating step selecting slots for selecting six different operating steps of said reader corresponding to six respective configurations thereof, that is: an idle step 0), a chip-card blocking step 1), a prepaid card advancement step 2), a prepaid card read-out protection step 3), a prepaid card ejection step 4), and a chip-card release step 5).

12. A multiple-function reader device according to the preceding claims, characterized in that it comprises an electromagnet (43) the punch-shaped moving core whereof is suitable for marking debit cards to provide a visual indication of the expenditure of the usable charge units stored on the magnetic band of said cards.

FIG.1

FIG.2

FIG . 3

FIG . 4

FIG. 5